# EUROPEAN PATENT APPLICATION

(11) **EP 3 444 631 A1**
(43) Date of publication of application: **20.02.2019**
(21) Application number: 18188613.6
(22) Date of filing: 13.08.2018
(51) Int. Cl.: G01S 13/34, G01S 7/35, G01S 13/93

(54) **FREQUENCY DOMAIN MIMO FOR FMCW RADAR**

(30) Priority: 15.08.2017 US 201715677583
(71) Applicant: Valeo Radar Systems Inc., Troy, Michigan 48083 (US)
(72) Inventor: Millar, Jeffrey, Mont Vernon, New Hampshire 03057 (US)
(74) Representative: Pothmann, Karsten

(57) **Abstract**

Systems, methods, and techniques for implementing multiple input, multiple output, MIMO, within the context of a linear frequency modulated continuous wave, FMCW, radar system (100) are provided. The radar system includes a MIMO transmitter (111) and MIMO receiver (103). The MIMO transmitter including a first plurality of transmit antennas (115), a like plurality of transmit signal paths, and a plurality of local oscillators. Each of the local oscillators can generate and provide a ramp signal to each of the plurality of transmit antennas such that each of a plurality of signals transmitted by the plurality of transmit antennas have a frequency which linearly changes from a first frequency to a second frequency and having different first frequencies. The MIMO receiver includes a second plurality of receive antennas (105) and a like plurality of receive signal paths.

## Description

### BACKGROUND

As is known in the art, some radio frequency (RF) systems may be implemented using multiple input multiple output (MIMO) techniques. As is also known, MIMO refers to a radio frequency (RF) system (e.g. a communication system or radar system) which can concurrently transmit different signals and concurrently receive return signals on several receive channels and downconvert the received RF signals to an intermediate frequency (IF) band. MIMO systems typically use digital signal processing (DSP) over an entire bandwidth of the corresponding RF system to analyze the received signals. Thus, the receiver portion of the MIMO system needs to process the entire RF bandwidth, which requires a lot of processing power and can be costly.

### SUMMARY

Systems, methods, and techniques described here provide for implementing multiple input, multiple output (MIMO) techniques within the context of a linear frequency modulated continuous wave (FMCW) radar system, also referred to herein as a frequency domain - MIMO (FD-MIMO) system.

In an embodiment, multiple linear FMCW chirp signals can be generated and transmitted concurrently or substantially concurrently from several transmit antennas to one or more receive antennas using a predetermined separation in the frequency domain between each of the transmitted chirp signals. The chirp signals are each provided having a first predetermined bandwidth. Each of the one or more receive antennas is coupled to a corresponding receiver which can track the chirp signals and thus tune to those frequencies, reducing their respective signal bandwidths to a second bandwidth (e.g., intermediate frequency (IF) bandwidth) that is less than and in some embodiments, a fraction of the first bandwidth of the chirp signals. This reduction in the signal bandwidth at each of the receive antennas can reduce cost and processing times.

For example, several chirp signals, each having different start frequencies, can be concurrently transmitted, with the chirp signals linearly changing (e.g., increasing or decreasing) in frequency, while maintaining the predetermined frequency separation such that they chirp in parallel. The frequency separation can be selected such that they don't overlap or collide. Further, the frequency separation can be selected such that IF signals from the several chirps do not interfere with each other when received at the one or more receive antennas and such that the signal bandwidths of each of the one or more receive antennas is within a desired range. In some embodiments, the frequency separation is selected such that it is greater than the IF bandwidth.

The one or more receive antennas can be paired with at least one to transmit antennas to form transmit reference pairs. The receive antennas can receive chirp signals from the transmit antenna they are paired with no frequency offset and receive chirp signals from transmit antennas they are not paired with one or more different frequency offsets. The transmit reference pairing and frequency offsets can be used to eliminate or reduce chirp signals overlapping when received at the one or more receive antennas. Thus, each of the one or more receive antennas can receive chirp signals from each of the transmit antennas concurrently or substantially concurrently.

In an embodiment, the FD-MIMO system can retain the full performance of the LFMCW signal while adding full MIMO capability. For example, the FD-MIMO system can be configured to perform signal processing without the need to digitize the entire bandwidth of the respective communication system (as described above) and instead, the received signal bandwidth can be proportional to the number of MIMO channels (similar to the spacing of the parallel LFMCW chirps). In one embodiment, a LFMCW radar may chirp over 2 GHz of bandwidth but receives and demodulates about 5 MHz because the receiver tracks the linear chirp of the transmitter.

To implement FD-MIMO in a communication system, each transmit antenna transmits a chirp signal separated in the frequency domain by a predetermined amount (e.g., 5MHz, 15Mhz, etc.) from the chirp signals transmitted by a different transmit antenna of the same communications system. A receiver analog to digital converter (ADC) can receive all of the parallel chirps in parallel. The frequency separation can prevent the demodulated bandwidths from overlapping. Further, this approach enables a true simultaneous or substantially simultaneous (concurrent) MIMO Tx/Rx radar system while still preserving the advantages of an LFMCW system design.

In a first aspect, in an automotive vehicle radar system, a sensor includes a multiple input and multiple output (MIMO) transmitter and a MIMO receiver. The MIMO transmitter includes a transmit antenna, a plurality of transmit signal paths, each of the transmit signal paths having an input and an output with the output coupled to the transmit antenna, and a plurality of signal sources. Each of the plurality of signal sources coupled to at least one of the plurality of transmit signal path inputs and each of the signal sources configured to generate and provide a chirp signal to each of the plurality of transmit signal paths such that each of a plurality of chirp signals emitted by the transmit antenna has a frequency which changes from a first predetermined frequency to a second predetermined frequency over a predetermined period of time. In an embodiment, each of the plurality of signals have a different first predetermined frequency. The MIMO receiver includes a receive antenna and a plurality of receive signal paths. Each of the receive signal paths having an input coupled to the receive antenna and an output at which an intermediate frequency (IF) signal is provided and each of the receive signal paths is coupled to a corresponding one of the plurality of signal sources such that each receive signal path is configured to receive at least a portion of a corresponding one of the plurality of chirp signals.

Each of the plurality of chirp signals can be separated by a predetermined frequency spacing from a second, different one of the plurality of chirp signals such that the plurality of chirp signals chirp in parallel from the first predetermined frequency to the second predetermined frequency. In some embodiments, each of the plurality of chirp signals are linear chirp signals. The plurality of chirp signals can include linear frequency modulated continuous wave chirp signals.

The predetermined frequency spacing can be equal between each of the plurality of chirp signals. In some embodiments, the predetermined frequency spacing can be maintained between each of the plurality of chirp signals within a chirp window.

The predetermined frequency spacing can be different between one or more of the plurality of chirp signals. In some embodiments, the predetermined frequency separation can be different at different points in time within a chirp window.

A rate of change of the plurality of chirp signals may correspond to a difference between the first predetermined frequency and the second predetermined frequency.

Each of the plurality of receive signal paths may include a frequency downconverter having a first input coupled to at least one signal source of the plurality of signal sources to receive a local oscillator signal and a second input coupled to an output of the at least one of the plurality of receive antennas. The frequency downconverter can generate an IF signal corresponding to a difference between a frequency of a return chirp signal and a frequency of the oscillator signal. In some embodiments, the frequency downconverter for each of the plurality of receive signal paths can provide a different IF signal for chirp signals transmitted from the same transmit signal path.

The transmit antenna may include a plurality of transmit antennas. The receive antenna may include a plurality of receive antennas. The number of receive antennas can be equal to the number of transmit antennas. The number of receive antennas can be equal to the number of chirp signals in the plurality of chirp signals. In some embodiments, the number of receive antennas can be different than the number of chirp signals in the plurality of chirp signals. A bandwidth of the MIMO receiver may be proportional to a number of the plurality of transmit antennas.

In another aspect, a method for transmitting and receiving signal for an automotive vehicle radar system is provided. The method includes generating a plurality of chirp signals with each of the chirp signals having a frequency characteristic such that the chirp signals linearly increase in frequency from a first predetermined frequency at a first point in time to a second predetermined frequency at a second point in time. The first predetermined frequency of each of the plurality of chirp signals can be different. The method further includes transmitting the plurality of chirp signals through a like plurality of transmit antennas, receiving a plurality of return chirp signals at a plurality of receive antennas such that each of the plurality of transmit antennas are paired with at least one of the plurality of receive antennas as a transmit reference.

At each of the plurality of receive antennas, the method includes comparing one or more of the plurality of return chirp signals to one or more oscillator signals, each of the one or more oscillator signals corresponding to the transmit reference of the respective one of the plurality of receive antennas and determining an intermediate frequency for each of the one or more of the plurality of return chirp signals. The intermediate frequency corresponds to a difference between a respective return chirp signal and a respective one of the one or more oscillator signals. The method further includes identifying a respective one of the plurality of transmit antennas that transmitted the one or more of the plurality of received signals.

The plurality of chirp signals can be transmitted through a single antenna coupled to the plurality of transmit antennas. In some embodiments, the plurality of chirp signals can be transmitted through the plurality of transmit antennas, wherein each of the plurality of transmit antennas are coupled to a single transmitter. At least one of the plurality of receive antennas can be coupled to multiple different receivers. In some embodiments, two or more of the plurality of receive antennas can be coupled to a single receiver.

Each of the plurality of chirp signals can chirp in parallel from the first predetermined frequency to the second predetermined frequency. Each of the plurality of chirp signals can be separated by a predetermined frequency spacing from a second, different one of the plurality of chirp signals as the plurality of chirp signals chirp in parallel from the first predetermined frequency to the second predetermined frequency.

An intermediate frequency bandwidth of each of the plurality of receive antennas can be proportional the predetermined frequency spacing. A different intermediate frequency can be determined for signals transmitted from the same transmit antennas of the plurality of transmit antennas by each of the plurality of receive antennas.

The plurality of chirp signals can be transmitted substantially concurrently from each of the plurality of transmit antennas. The plurality of chirp signals can be received substantially concurrently at each of the plurality of receive antennas.

In another aspect, in an automotive radar system, a sensor includes a MIMO transmitter and a MIMO receiver. The MIMO transmitter includes a plurality of means for emitting, a like first plurality of transmit signal paths, each of the transmit signal paths having an input and an output with the output coupled to a corresponding one of said plurality of means for emitting, and a first means for generating radiofrequency (RF) chirp signals to each of the transmit signal paths. Each RF signal path receives a corresponding one of a like plurality of RF chirp signals with each of said chirp signals having a frequency which linearly changes from a first frequency to a second, different frequency, and each of the plurality of RF chirp signals has a different first frequency. The MIMO receiver includes a plurality of means for receiving and a like second plurality of receive signal paths, each of said receive signal paths having input coupled to a corresponding one of said means for receiving and coupled to receive a portion of a respective one of said RF chirp signals such that each of said receive signal paths receive a portion of a corresponding one of the RF chirp signal provided to each of said plurality of RF transmit paths.

Each of the plurality of RF chirp signals can be separated by a predetermined frequency spacing from a second, different one of the plurality of RF chirp signals such that the plurality of RF chirp signals chirp in parallel from the first predetermined frequency to the second predetermined frequency. The predetermined frequency spacing can be equal between each of the plurality of RF chirp signals. The predetermined frequency spacing can be maintained between each of the plurality of RF chirp signals within a chirp window.

In some embodiments, the predetermined frequency spacing can be different between one or more of the plurality of RF chirp signals. The predetermined frequency separation can be different at different points in time within a chirp window.

The details of one or more embodiments of the disclosure are set forth in the accompanying drawings and the description below. Other features, objects, and advantages of the disclosure will be apparent from the description and drawings, and from the claims.

### BRIEF DESCRIPTION OF THE DRAWINGS

FIG. 1 is a block diagram of a frequency domain-multiple input multiple output (FD-MIMO) radar system;
FIG. 1A is a block diagram of an example FD-MIMO system which may be the same as or similar to the FD-MIMO radar system of FIG. 1;
FIG. 1B is a block diagram of an example chirp generator;
FIG. 2 is a plot of frequency versus time illustrating linear frequency modulated continuous wave (FMCW) chirp signals transmitted from multiple transmitters;
FIG. 3 is a plot of frequency versus time illustrating multiple linear FMCW chirp signals transmitted from three transmitters and separated in the frequency domain by different amounts;
FIG. 3A is a schematic of received signal bands for three receivers receiving returns in response to the transmitted linear FMCW chirp signals of FIG. 3;
FIG. 3B shows receiver frequency bands for the three receivers of FIG. 3A; and
FIGs. 4-4A are a flow diagram of a method for transmitting and receiving signals for an automotive vehicle radar system.

### DETAILED DESCRIPTION

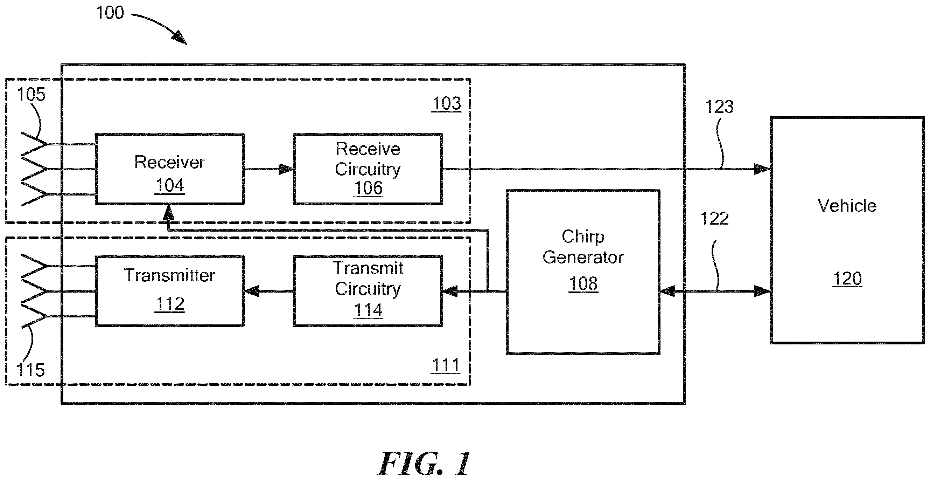

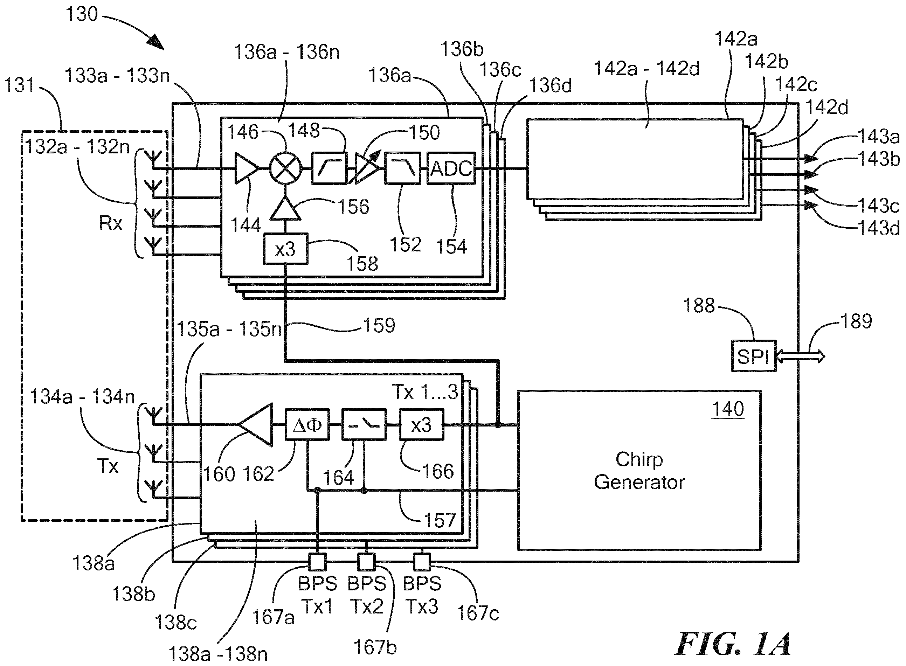

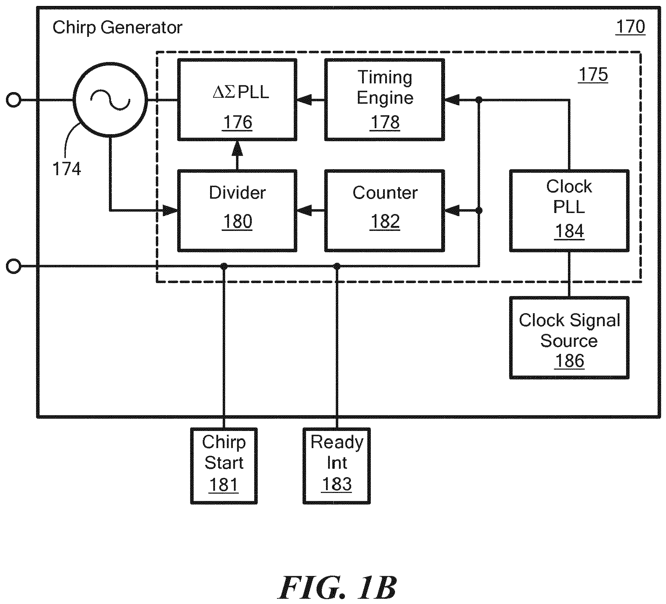

Now referring to FIG. 1, a radar system 100 includes a receive signal path 103 and a transmit signal path 111 coupled to a chirp generator 108. Receive path 103 includes one or more receive antennas and one or more receivers 104 coupled to a receive processing circuitry 106 and transmit path 111 includes one or more transit antennas and one or more transmitters 112 coupled to transmit processing circuitry 114. A controllable signal source 110 (e.g. a voltage controlled oscillator or VCO) is coupled to each of the receive and transmit path 103, 111 and provides chirp signals thereto in a manner to be described below.

As used herein, the term "chirp" is used to describe a signal having a characteristic (e.g. frequency, amplitude, or any other characteristic or combinations of any characteristics) that varies with time during a time window. Typically, in those instances when the frequency of the signal is varied, each chirp has an associated start and end frequency. A chirp may be a linear chirp, for which the frequency varies in a substantially linear fashion between the start and end frequencies. The chirp may also be a non-linear chirp. In embodiments, the example radar system 100 may operate as a frequency modulated continuous wave (FMCW) radar system, in which the frequency of a transmitted chirp signal changes from a first predetermined frequency to a second predetermined frequency. In embodiments, the frequency of the chirp signals may increase from the first frequency to the second frequency or may decrease from the first frequency to the second frequency. In embodiments, the frequency of the chirp signal changes linearly with respect to time between the first frequency and the second frequency.

Although an example system described herein uses linear (FMCW) chirp signals, it will be appreciated that other types of chirp signals may also be used. Transmitter 112 can be configured to transmit a variety of different radio frequency (RF) chirp signals, (e.g., linear FMCW chirp signals), each having a different first (or start) frequency, as will be discussed in greater detail below.

Receiver 104 may include a plurality of receive antennas and can be configured to receive RF signals (e.g., FMCW chirp signals). In an embodiment, outputs of receive antennas are coupled to separate receive paths within receiver 104 and subsequently coupled to inputs of receive processing circuitry 106, which may for example process receive signals in digital form. Receiver 104 receives return RF chirp signals from the receive antennas and down converts the signals to intermediate frequency (IF) signals which are then provided to receive processing circuitry 106 and subsequently to other processing portions of vehicle 120. Chirp generator 108 is configured to provide chirp signals to corresponding pairs of separate transmit and receive paths within receiver 103 and transmitter 111.

In some embodiments, the number of chirp generators 108 corresponds to the number of individual transmit signal paths in transmitter 111.

Chirp generator 108 can be configured to provide control or other signals to vehicle 120 and/or receive control or other signals from vehicle 120 though a signal path 122 (e.g., a bus). In some embodiments, receiver 103 provides signals characterizing an object within a field of view of the radar 100 to vehicle 103 via signal path 123. The signals may include, but are not limited to, a target detection signal when a target exceeds a system preset thresholds. The signals may be coupled to a control unit of vehicle 120 for various uses such as blind spot and near object detection.

Radar system 100 can be coupled to (e.g., communicatively or directly) or be a component of an automotive vehicle 120 for various applications, such as but not limited to, detecting one or more objects, or targets in the field of view of vehicle 120. As will be apparent to those of ordinary skill in the art, the radar system 100 is also suitable for use in many different types of applications including but not limited to any land-based vehicle marine applications in which radar system 100 can be disposed on a boat, ship or other sea vessel and may also find use in aerial vehicles (including, but not limited to, unmanned aerial vehicles). The radar system 100 is configured to operate at frequencies suitable for applicable operation (e.g. marine, land or airborne operation)

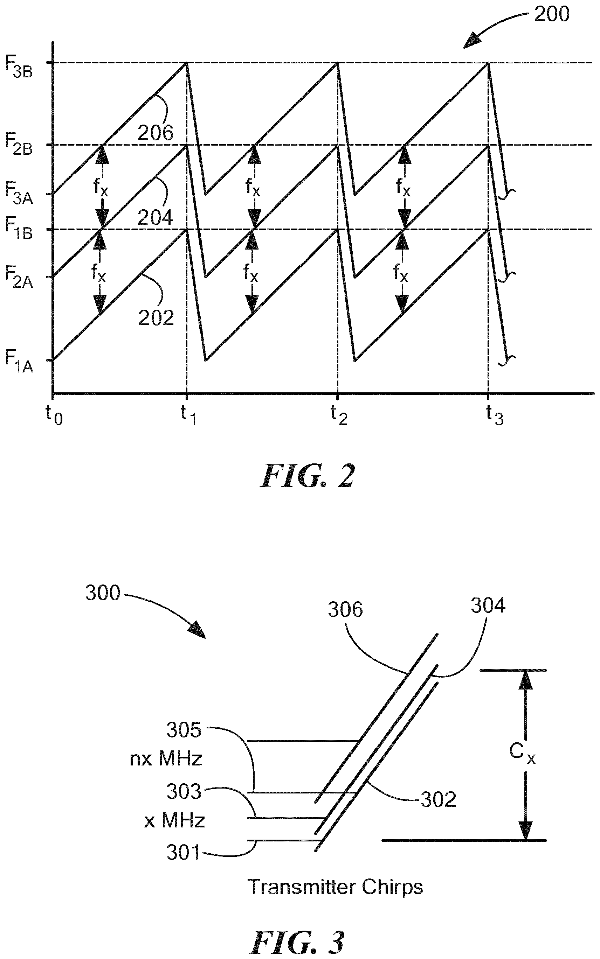

Now referring to FIG. 1A, a radar system 130 which may be the same as or similar to radar system 100 described above in conjunction with FIG. 1, includes a receive path 133 and a transmit path 135. Transmit path 135 includes a plurality, here three, chirp generators 140a-140c which generate chirp signals (e.g. as will be described below in conjunction with FIGs. 2-3A) and provides respective ones of the chirp signals to corresponding ones of a like plurality of transmitter circuits 138a-138c.

It should be appreciated that the number of chirp generators 140a-140c in a particular radar system may vary based at least in part on the number of transmitter circuits 138a-138c, the number of receiver circuits and/or a particular application of the radar system. For example, in the illustrative embodiment of FIG. 1A, the number of chirp generators 140a-140c is equal to the number of transmitter circuits 138a-138c, here three. However, in other embodiments, one chirp generator can be coupled to each transmitter circuit and separate, different, ones of chirp generators can be coupled to each receiver circuit of the respective radar system.

Transmitter circuits 138a-138c receive the chirp signals provided thereto from respective ones of chirp generators 140a-140c and provide the RF chirp signals to respective ones of transmit antennas 134a-134c through which the chirp signals are emitted. In preferred embodiments, the number of transmit antennas matches the number of chirp signal transmit signal paths. It should, of course, be appreciated that in other embodiments the number of transmit antennas may not match the number of transmitter circuits 138. For example, the number of transmit antennas may be less than the number of transmit antennas, in which case multiple transmit circuits may be coupled to the same antenna (e.g. a single antenna) such that multiple chirp signals can be concurrently (or substantially concurrently) transmitted. Alternatively, the number of transmit antennas may be greater that the number of transmit circuits, in which case ones (or all) of the transmit circuits may be coupled to multiple antennas (in which case all or only a portion of each chirp signal may be provided to respective ones of the antenna). For example, in some embodiments, a radar system may include one or more antenna interconnect systems to couple multiple transmit antennas to the same transmitter circuit. In such an embodiment, the number of antenna interconnect systems may be equal to the number of chirps. In some embodiments, the radar system may switch transmit antennas between chirps if the transmit antennas have different beam patterns and/or if the respective radar system is attempting to implement time division MIMO in addition to FD-MIMO.

As illustrated in FIG. 1A, chirp generator 140 can generate a plurality of chirp signals, as will be described in detail below in conjunction with FIGs. 2-3A. In this illustrative embodiment, the chirp signals are provided having a frequency which linearly changes from a first (or start) frequency to a second (or stop) different frequency, with each of the chirp signals having different start frequencies. It should of course, be appreciated that other types of chirp signals may also be used.

The description of the transmit operations of radar system 130 below refers to one chirp signal provided by one chirp generator 140 which is coupled to one receiver 136a and one transmitter circuit 138a and emitted through one transmit antenna 134a.

Chirp generator 140 provides a first chirp signal to an input of a frequency multiplier circuit 166 of transmitter circuit 138a through a signal path 161. Multiplier circuit 166a multiplies the frequency of the signal provided by thereto as is generally known to provide a desired radio frequency (RF) chip signal.

Chirp signal generator 140 also provides at least a portion of the first chirp signal to receiver 136a. Thus, receiver circuit 136a and transmit circuit 138a each receive at least a portion of the first chirp signal (that is, receiver 136a and transmitter 138a each receive a chirp signal having substantially the same chirp characteristics). Thus, receiver 136a and transmitter 138a may be said to be "paired".

In general, chirp generator 140 generates a plurality of chirp signals and respective ones of the chirp signals are provided to pairs of transmitters and receivers. In the example of FIG. 1A, at least a portion of the respective chirp signals are provided to the plurality receivers 136-136d through one or more signal paths 159 (only a single such path shown in FIG. 1A for clarity).

An output of multiplier 166 is coupled to a first input of a gating circuit 164. An output of gating circuit 164 is coupled to a first input of a phase adjustment module 162. A second input of each gate circuit 164 and phase module 162 is coupled to a second signal path 157 from chirp generator to receive signals from chirp generator 140 to appropriately control the chirp signals as is generally known (e.g., second signal path 157 can be coupled to an output signal path of a clock phased lock loop (PLL) 184 of chirp generator 140, as discussed below with respect to chirp generator 140). A first binary phase shift port 167a is coupled to second signal path 157 and can be configured to provide phase shift signals to phase adjustment module 162 and/or gate circuit 164. In an embodiment, the phase shift signals can include a phase shift to be applied to a chirp signal to be emitted by transmit antenna 134a. As illustrated in FIG. 1A, each transmitter circuit 138 may include a binary phase shift port 167 (e.g., second transmitter circuit 138b includes second binary phase shift port 167b, third transmitter circuit 138c includes third binary phase shift port 167c, etc.) coupled to a signal path from chirp generator 140.

An output of phase adjustment module 162 is coupled to an input of an amplifier 160 and an output of amplifier 160 is coupled to an input of a first transmit antenna 134a through signal path 135a. In an embodiment, transmit antenna 134a emits one or more of the RF chirp signals initiated by chirp generator 140.

Referring briefly to FIG. 2, a plot 200 of frequency versus time illustrates three chirp signals 202, 204, 206 linearly increasing in frequency from a first frequency to a second, different frequency plurality during each of a plurality of different time windows T₁-T₂, T₂-T₃, etc. It should be appreciated that although FIG. 2 illustrates the three chirp signals 202, 204, 206 as linear chirps, in other embodiments, the chirp signals may include non-linear chirps.

It should be appreciated that each of chirp signals 202, 204, 206 can be generated by a system which may be the same as or similar to radar system 100 of FIG. 1 (e.g., via one or more controllable signal sources 110) and/or radar system 130 of FIG. 1A (e.g., via one or more chirp signal generators 140). Each of first, second and third chirp signals 202, 204, 206 can be emitted via a corresponding transmit antenna (e.g., transmit antennas 115 of FIG.1, or respective ones of transmit antennas 134a-134c of FIG. 1A).

Over a first time range, here T₀-T₁, first chirp signal 202 is provided having a frequency which linearly increases from a first (or start) frequency (F_{1A}) at a time T₀ to a second (or stop) frequency (F_{1B}) at time T₁. First chirp signal 202 can be repeated over a plurality of time windows ranges (e.g., T₁-T₂, T₂-T₃, etc.)

Similarly, over the first time range T₀-T₁, a second chirp signal 204 is provided having a frequency which linearly increases from a first (or start) frequency (F_{2A}) at time T₀ to a second (or stop) frequency (F_{2B}) at time T₁. Significantly, start frequency F_{2A} of the second chirp signal 204 is different than start frequency F_{1A} of the first chirp signal 202. Thus, a first frequency (or separation) offset exists between the first and second chirp signals. In this example embodiment, a constant frequency offset exists between the two chirp signals 202, 204. It is, of course, possible to use a varying frequency offset. Thus, at each point in time, the frequency of the first chirp is separated by the frequency of the second chirp by a known amount (i.e. by known frequency). For example, in some embodiments, the frequency separation is selected such that it is greater than the IF bandwidth. Second chirp signal 204 may be repeated over a plurality of different time ranges (e.g., T₁-T₂, T₂-T₃, etc.)

Likewise, over the first time range T₀-T₁, a third chirp signal 206 is provided having a frequency which linearly increases from a first (or start) frequency (F_{3A}) at time T₀ to a second (or stop) frequency (F_{3B}) at time T₁. Start frequencies F_{3A} of third chirp signal 206 is different than the start frequency F_{1A}, F_{2A} of the first and second chirp signals 202, 204, respectively. Thus, at each point in time, the frequency of the first chirp signal is separated from the frequencies of the second and third chirp signals by known amounts which may be either a constant frequency offset or a varying offset). Third chirp signal 206 may be repeated over a plurality of time ranges (e.g., T₁-T₂, T₂-T₃, etc.)

Each of first, second and third chirp signals 202, 204, 206 are separated in the frequency domain by a predetermined amount, here represented by Fₓ. Thus, the first frequency, F_{1A}, of first chirp signal 202 is separated by a known frequency offset Fₓ from the first frequency, F_{2A}, of second chirp signal 204 and the first frequency, F_{2A}, of second chirp signal 204 is separated by known frequency offset Fₓ from the first frequency, F_{3A}, of third chirp signal 204. Chirp signals 202, 204, 206 maintain the frequency separation over each chirp time period (e.g. T₀ - T₁, T₁, - T₂, T₂-T₃).

Accordingly, at first time, T₁, the second frequency, F_{1B}, of first chirp signal 202 is separated by a frequency Fₓ from the second frequency, F_{2B}, of second chirp signal 204 and the second frequency, F_{2B}, of second chirp signal 204 is separated by the frequency Fₓ from the third frequency, F_{3B}, of third chirp signal 204.

In an embodiment, such frequency separation allows a system to concurrently transmit chirp signals 202, 204, 206 (e.g., through transmit antenna 115 of FIG.1, or respective ones of transmit antennas 134a-134c of FIG. 1A) and have corresponding return chirp signals concurrently received at one or more receivers (e.g., via receive antenna 105 of FIG.1, or respective ones of receive antennas 132a-132c of FIG. 1A). In some embodiments, the frequency separation can be selected such that the chirp signals do not overlap in frequency when received at one or more receive antennas and the signal bandwidth of the respective ones of the one or more receive antennas is within a desired range or bandwidth threshold (e.g., the frequency separation does not cause the signal bandwidth of the receive antennas or receiver circuit to grow beyond the desired range or bandwidth threshold).

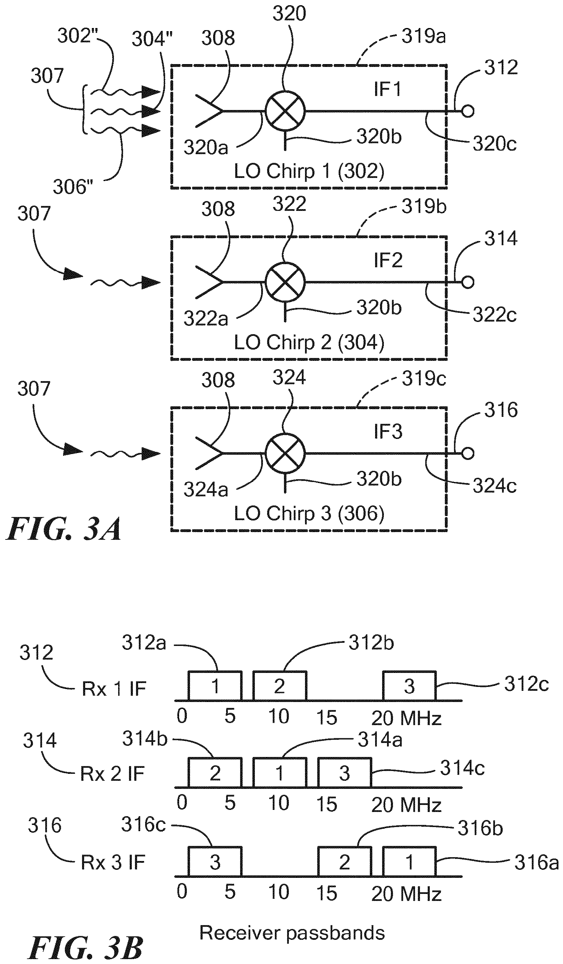

Although plot 200 illustrates first, second and third chirp signals 202, 204, 206 separated by the same amount in the frequency domain, in other embodiments, they may be separated by different amounts and still maintain a known offset relationship. For example, first chirp signal 202 can be separated by second chirp signal 204 by a first frequency, Fₓ, and second chirp signal 204 can be separated by third chirp signal 206 by a second frequency, F₂ₓ. An example of such an approach is described below in conjunction with FIGs. 3 and 3A.

It should also be appreciated that although plot 200 shows each of first, second and third chirp signals 202, 204, 206 linearly increasing in frequency, in other embodiments, first, second and third chirp signals 202, 204, 206 can be generated such that they linearly decrease in frequency. Alternatively, nonlinear chirps could be used. Furthermore, although three chirp signals are shown in the example, any number of chirp signals may be used with an appropriately selected number of transmitters and receivers

Referring back to FIG. 1A, receive path 130 includes a plurality of receive antennas 134a-134d, each of which is coupled through respective ones of signal paths 133a-133d, to a corresponding one of receivers 136a-136d. Although, the example of FIG. 1A shows four antenna's 132a-132d, four receivers 136a-136d, and four processing circuits 142a-142d, it should be appreciated that any number of antenna, receivers and processors could be used. In some embodiments, the number of receivers can be selected based at least in part on a number of transmitted chirps (e.g., one receiver for each transmitted chirp). It should also be appreciated that each receiver may include multiple antenna processing channels (e.g., receiver paths, processing circuits).

Similar to transmit operations described above, the receive operations described below are with reference to one receive antenna 132A, one signal path 133a, one receiver 136a, and one digital signal processor portion 142a.

A first receive antenna 132a receives one or more of a plurality of return chirp signals (e.g. a return from transmit chirp signals 202-206 in FIG. 2). Receiver 136a receives a local oscillator (LO) signal corresponding to one of the chirp signals. Thus, the LO signal provided to each receiver 136a-136d, the receiver is able to distinguish which chirp transmission is being processed by the receiver. As noted above, the return chirp signals can be received concurrently or substantially concurrently.

To process the received chirp signal(s), and as illustrated in FIG. 1A, an output of a first receive antenna 132a is coupled to an input of an amplifier 144 (e.g. a low noise amplifier) via a signal path 133a. Amplifier 144 amplifies the signal provided thereto and provides an amplified signal to an RF input of a downconverter 146. A second input of downconverter 146 receives a local oscillator (LO) signal derived from chirp generator 140 and provided thereto via a multiplier 158 and an amplifier 156. Thus, the LO signal provided to down converter 146 has the same chirp characteristics as the transmit RF chirp signal emitted from transmit antenna 134a. Downconverter 146 receives the RF and LO signals provided thereto and provides an intermediate frequency (IF) signal at an output thereof as is generally know. Again, since each of receivers 136a-136d receives an LO signal corresponding to one of a plurality of transmit chirp signals (e.g. from one of transmitters 138a-138c) each receiver can correlate return chirp signals to a corresponding one of the transmitted chirp signals. Furthermore, the IF signal bandwidth of each receiver 136a-136d can be relatively narrow.

In embodiments, each receive antenna 132a- 132d and receiver 136a-136d can receive RF frequencies in the range of F_{1A}-F_{3B} (i.e., the start frequency of the first chirp 202 in FIG. 2and the stop frequency of the third chirp 206 in FIG. 2). Each receiver also receives a corresponding one of the chirp signals as a local oscillator signal. Thus, the IF bandwidth of receivers 136a-136d may be relatively narrow. The IF frequency is proportional to the chirp frequency slope and the time delay from at least one of the transmitters to the at least one of the receivers in a radar system. In embodiments, the maximum range determines the maximum IF frequency for a particular radar system.

In alternate embodiments, rather than utilizing receiver circuitry which covers an RF frequency range from F_{1A} to F_{3B} (i.e. the start frequency of the first chirp 202 in FIG. 2 to the stop frequency of the last chirp 206 in FIG. 2), each receiver need only have a bandwidth which covers the start and stop frequency of a single chirp. For example, in one embodiment, receiver path 136a need only have a bandwidth which allows reception of signals having a frequency in the range of F_{1A} - F_{1B} (i.e. the start and stop frequencies of chirp 202 in FIG. 2) and receiver path 136b need only have a bandwidth which allows reception of signals having a frequency in the range of F_{2A} - F_{2B} (i.e., the start and stop frequencies of chirp 204), and receive path 125c need only have a bandwidth which allows reception of signals having a frequency in the range of F_{3A} - F_{3B} (i.e., the start and stop frequencies of chirp 206).

The IF signal provided by downconverter 146 is appropriately filtered and level adjusted (e.g., via filters 148, 152 (e.g. high and low pass filters) and level adjustment circuit 158) before being provided to an input of an analog-to-digital converter (ADC) 154. ADC 154 receives the filtered IF signal and provides a digital version of the signal at an output thereof for further processing.

For example, and as illustrated in FIG. 1A, an output of ADC 154 is coupled to a processing circuit 142a. Processing circuit 142a may include a signal processor, such as but not limited to a windowed fast Fourier transform (FFT) implemented in hardware or software.

In an embodiment, an output of processing circuit 142a may correspond to an output of radar system 130. Radar system 130 may also include an interface module 188 (e.g., serial peripheral interface) coupled to a vehicle (e.g., vehicle 120 of FIG. 1, or other form of motorized machine that can be used to transports people, goods, etc.) through an output signal bus 189.

Referring now to FIG. 1B, in one embodiment, a chirp generator 170, which may be the same as or similar to chirp generator 140 described above in conjunction with FIG. 1A includes a controllable signal source 174 coupled to a phase lock loop circuit 175, which in turn is coupled to a stable oscillator 186 (e.g. a crystal oscillator). To generate the chirp signals, a clock signal may be provided to an input of a clock module 186 of chirp generator 140. An output of clock module 186 is coupled to an input of a clock phased lock loop (PLL) 184. An output signal path of clock PLL 184 is coupled to an input of a timing module (or timing engine) 178 and an input of a counter module 182, and to different components of transmitter circuit 138, as discussed in greater detail above with respect to transmitter circuit 138a. A ready module 183 and a chirp start module 181 are coupled to the output signal path of clock PLL 184. Ready module 183 and chirp start module 181 can be configured to generate and provide synchronization signals to a transmitter processing circuit and/or a receiver processing circuit coupled to the respective output signal path of clock PLL 184. For example, in some embodiments, the synchronization signals can be used to enable time synchronization between separately chirping transmitter and between sequential chirps in a measurement cycle. In embodiments, the timing accuracy can be on a nanosecond scale.

An output of timing module 178 is coupled to a first input of a PLL 176. An output of PLL 176 is coupled to an input of signal source 174. In an embodiment, and as illustrated in FIG. 1B, a portion of the output of signal source 174 can be fed back and thus provided to a first input of a divider circuit 180 (e.g., 1/n divider circuit) for error detection. For example, the output of signal source 174 can be divided and counted down to equal a reference frequency provided from a counter module 182. In such an embodiment, divider circuit 180 can include a fixed divider that brings the signal down to a predetermined number (e.g., a few hundred MHz from, for example, 24, 38, or 76 GHz). A second input of divider circuit 180 is coupled to the output of counter module 182 to receive a reference signal (e.g., reference signal having a reference frequency). Counter module 182 may include a programmable divider to aid in synthesizing the linear chirp. Divider circuit 180 can be configured to perform error detection for PLL 176 by dividing the frequency of the portion of the signal received from signal source 174 by the predetermined number and comparing the result to the reference signal received from counter module 182. Thus, divider circuit 180 can detect when PLL 176 is in a locked condition. An output of divider circuit 180 is coupled to PLL 176.

In response to the phase lock loop and divider signals provided thereto, signal source 174 generates one or more chirp signals, such as but not limited to a linear FMCW chirp that changes (e.g., increases, decreases) from a first (or start) frequency to a second (or stop), different frequency.

Now referring to FIG. 3, a plot 300 illustrates first, second and third chirp signals 302, 304, 306 transmitted concurrently or substantially concurrently (e.g. emitted via three different transmit antennas respectively). In this example, the first chirp signal 302 is offset in frequency from second chirp signal 302 by a first frequency amount, X MHz, and second chirp signal 304 can be offset in the frequency domain from second chirp signal 302 by a second, different frequency amount, nX MHz. Chirp signals 302, 304, 306 can maintain this frequency separation during subsequent concurrent chirp transmission.

As also illustrated in plot 300, the chirp signals have a chirp bandwidth of Cx. The bandwidth of each of the transmit signal paths can be at least equal to the chirp bandwidth of chirp signals 302, 304, 306, here Cx.

The frequency offset between each of chirp signals 302, 304, 306 can be selected such that it is less than an IF signal bandwidth of each of the receivers in a radar system. For example, the offset can be selected in accordance with the number of chirp signals and/or the number of receivers used in a particular application. That is, a relationship exists between the number of transmitters and receivers required to suit the needs of a particular application. The factors to consider in selecting the number of chirp signals, the number of transmitters, and/or the number of receivers to use in a particular application includes, but is not limited to power transmission limits or standards established by appropriate agencies in the respective field of the application of the radar system. For example, in some embodiments, a total power transmitted by a radar system can be limited by respective governing agencies in a field, for example and without limitations, the Federal Communications Commission (FCC) and/or similar governing agencies. Thus, a total power transmitted may be based at least in part on these limits or standards. The power transmitted by any one MIMO transmit element can therefore be reduced by the number of transmit channels, which can reduce the signal to noise ratio at the receiver and limit the number of receiver MIMO channels. It should further be appreciated that the receiver ADC bandwidth, and associated signal processing bandwidth can increase in proportion to the number of receiver MIMO channels.

For example, in one embodiment, a system may be provided having three receivers with each of the receivers having a 20 MHz IF bandwidth. In such an embodiment, a frequency offset of 5 MHz can be used between first and second chirps 302, 304 and a 10 MHz frequency offset can be used between second and third chirps 304, 306. Thus, in this example, a plurality of constant but different frequency offsets are used between the different chirp signals. In this example, at least three transmit antenna bands can be included within the 20 MHz IF bandwidth and be received at each of the three receivers without overlapping.

Referring to FIG. 3A, return RF chirp signals 307 (i.e. portions of transmit signals 302, 304, 306 are reflected from objects and intercepted by one or more receive antenna 308) are received by antenna(s) 308 and provided to RF signal ports 320a, 322a, 324a, of respective ones of mixers 320, 322, 324. Mixers 320, 322, 324 receive respective ones of LO signal ports 322b,324b,324c. The mixers are responsive to the RF and LO signals provided thereto and provide IF output signals 312, 314, 316 at respective ones of IF port 320c, 322c, 324c.

For example, and now referring to FIG. 3B, which illustrates receiver frequency bands for a first IF output 312 of a first receiver 310a (FIG. 3A), a second IF output 314 of a second receiver 319B (FIG. 3A) and a third IF output 316 of a third receiver 319c (FIG. 3A).

Thus, as illustrated above, transmitters and receivers can be grouped together in pairs such that each transmitter and receiver in the respective pair receives operate with signals (e.g. transmit and local oscillator signals) having the same chirp characteristics. Thus, when a receiver receives a chirp signal emitted by a transmitter with which it is respectively paired, the receiver applies a local oscillator (LO) chirp signal during processing (e.g., downconversion) that was used to generate the received chirp signal emitted by its transmit reference (i.e. by its paired transmitter). For example, in some embodiments, a first transmitter 301 emitting chirp 302 can be paired with the first receiver to produce the first IF output 312 in response to received return chirp signals, a second transmitter 303 emitting chirp 306 can be paired with the second receiver producing the second IF output 314, and a third transmitter 305 can be paired with the third receiver having the third IF output 316. In such an embodiment, each of receivers can process chirp signals emitted by their corresponding transmit reference pair such that an IF signal is generated having no frequency offset (e.g., 0 MHz offset), as illustrated by receiver outputs 312a, 314a, 316a in FIG. 3B.

In one embodiment, receiver 319a (FIG. 3A) having the first IF output 312 receives first chirp LO signal 302' from first transmitter 301 and combines the received return chirp signal 302" with the first LO signal 302' (e.g., the same LO signal that was used to generate first chirp signal 302) through a downconversion process, which results in an IF signal having no frequency offset 312a. However, first receiver having the first IF output 312 can receive second and third return chirp signals 304", 306" from second and third transmitters 303, 305 respectively and combine each of them with the first LO signal 302', which results in IF signals having a first frequency offset 312b for chirp signals emitted by the second transmitter 303 and a second frequency offset 312c for chirp signals emitted by the third transmitter 305.

Second receiver 319b (FIG. 3A) having the second IF output 314 receives second return chirp signal 304" from a transmit chirp 304 transmitted by second transmitter 303 and combines the received chirp signal 304" with a second LO signal 304' (e.g., the same LO signal that was used to generate second chirp signal 304) through a downconversion process, which results in an IF signal having no frequency offset 314a. However, second receiver 319b having the second IF output 314 can receive first and third return chirp signals 302", 306" from transmit chirps 302, 306 emitted by first and third transmitters 301, 305 respectively and combine each of them with the second LO signal 304', which results in IF signals having a first frequency offset 314b for chirp signals emitted by first transmitter 301 and a second frequency offset 314c for chirp signals emitted by third transmitter 305.

Third receiver 319c (FIG. 3A) having the third IF output 316 receives third return chirp signal 306" from a transmit chirp 306 emitted by third transmitter 305 and combines the received chirp signal 306" with the third LO signal 306' (e.g., the same LO signal that was used to generate third chirp signal 306) through a downconversion process, which results in an IF signal having no frequency offset 316a. However, third receiver 319c having the third IF output 314 can receive first and second return chirp signals 302", 304" from transmitted chirps 302, 304 emitted by first and second transmitters 301, 303 respectively and combines each of them with the third LO signal, which results in IF signals having a second frequency offset 316c for chirp signals emitted by first transmitter 301 and a first frequency offset 316b for chirp signals emitted by second transmitter 303.

Using the transmit LO chirp reference pairs and frequency offsets at each of the receivers, multiple chirp signals can be received concurrently without overlapping. The offsets can be used in conjunction with the local oscillator signals (or oscillator signal) that are the same as or proportional to the local oscillator signal provided to the respective one of the receiver transmit reference to determine which transmitter emitted a particular chirp signal.

For example, the oscillator signals can be used as part of the downconversion process to generate IF signals as described above, and determine if the IF signals are within a predetermined frequency range (e.g., in-band) or outside the predetermined frequency range (out of band). When the downconversion is performed for chirp signals from a transmit reference, the generated IF signal can fall within an acceptable frequency band (e.g., in-band). However, when the oscillator signal is applied to chirp signals received from other transmitters (i.e., not the transmit reference), the generated IF signals can be outside of the acceptable frequency band (e.g., out of band) for the respective receiver.

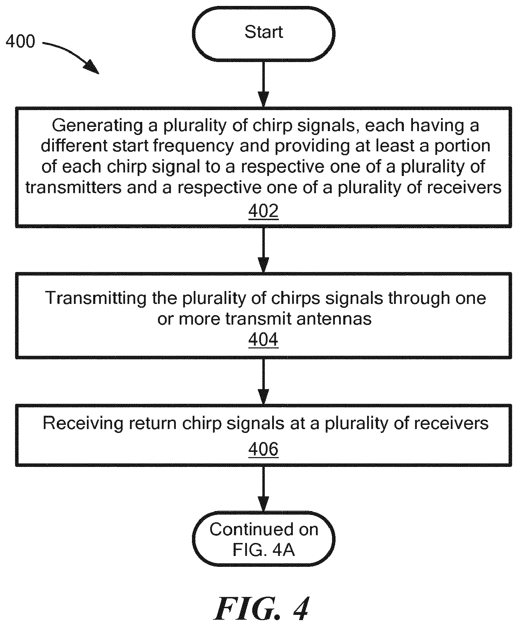

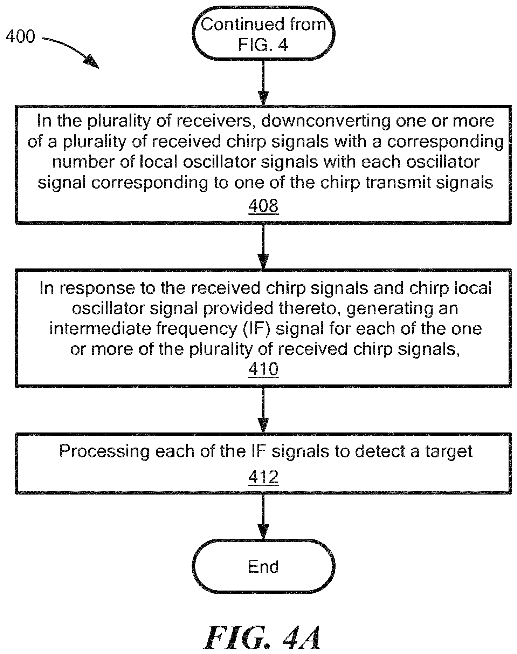

Now referring to FIGs. 4-4A, a method 400 for transmitting and receiving signals for an automotive vehicle radar system begins at block 402, by generating a plurality of chirp signals, each having a different start frequency. The chirp signals can be generated based at least in part on a corresponding ramp signal (e.g. as may be provided to a voltage controlled oscillator). The chirp signals may be provided having increasing or decreasing frequency characteristics. In one embodiment, the chirp signals are each provided as linear FMCW chirp signals.

In embodiments, to generate the chip signals, a controller ramp signal can be provided to a controllable oscillator, such as a voltage controlled oscillator (VCO). In response to the ramp signal, the VCO can generate a linear FMCW chirp signal. A frequency of the chirp signal can vary linearly (e.g., increase or decrease) or non-linearly.

The chirp signals can be generated such that they increase or decrease linearly from the first frequency to the second frequency and each of the chirp signals can have a different first (or start) frequency. To provide the different first frequency, the chirp signals can be separated (or spaced) from each other in the frequency domain by a predetermined frequency. In some embodiments, the chirp signals can be evenly separated. For example, each of the chirp signals can be separated by the same frequency amount. In other embodiments, the chirp signals can be separated by one or more different frequency amounts. In embodiments, this frequency separation can be maintained within a chirp window (i.e., constant separation or offset). In embodiments, the frequency separation can be different at different points in time within a chirp window (e.g., time period T₀-T₁ in FIG. 2 is an example of a chirp window).

Receivers can be configured to track each of the transmitters over a total chirp bandwidth of each of the chirp signals and receive return signals emitted in response to the transmit chirp signals.

At block 404, the plurality of chirp signals can be emitted through one or more of transmit antennas. The chirp signals can be emitted such that they chirp in parallel (i.e., concurrently emitted chirp signals) with respect to each other. As indicated above, each of the chirp signals can be generated having different start frequencies and thus be spaced in the frequency domain from each other. When the chirp signals are emitted they can maintain this frequency separation such that they chirp in parallel with respect to each other from their respective first frequency to their respective second frequency.

At block 406, return chirp signals are received at a plurality of receivers. In embodiments, the received chirp signals can be provided to a first input of a downconverter and a second input of the downconverter can be coupled to a local oscillator. In an embodiment, the downconverter downconverts the received chirp signal to the IF signal.

At block 408, in each receiver, the received chirp signals are down converted to IF signals via a local oscillator chirp signal. To process the received chirp signals, each of the receivers can be paired with at least one of the transmitters to form receive/transmit pairs which show a chirp signal (i.e. a chirp signal is provided to both a transmitter and a receiver, thus forming a transmitter - receiver pair). Thus, each receiver can process chirp signals from the transmitter which it is paired and generate IF signals having no frequency offset. However, the same receivers can process chirp signals from other transmitters and generate IF signals with different frequency offsets. The differences in frequencies between the generated IF signals can be used to determine the transmitter which produced the chirp signal. Thus, a plurality of chirp signals from a like plurality of transmitters can be received concurrently at each of the receivers without overlapping (i.e., the received if signals fall with different frequencies ranges depending upon the frequency of the transmitter chirp).

Such signal comparisons can be performed as part of the signal processing of the received chirp signals.

As indicated above, the local oscillator signal for the downconversion can be derived from the same signal source that is coupled to the transmitter and thus provide an RF chirp signal. Thus, each respective receiver may be said to be paired with a transmitter. For example, if a first receiver is paired with a first transmitter in a communications system, the first receiver can be coupled to the same signal source which generates transmit signals. Alternatively, the receiver may be coupled to a signal source which produces a local oscillator signal which is the same as the transmit signal. Thus, each of the local oscillator signals can correspond to a respective one of the transmit chirp signal provided to respective ones of a plurality of transmitters.

At block 410, an IF can be generated for each of the one or more of the plurality of received chirp signals. In an embodiment, a downconverter downconverts the received chirp signal to an IF signal. The IF signal corresponds to a difference between at least one of the plurality of received chirp signals and a respective one of the one or more local oscillator signals.

At block 412, each of the IF signals can be processed to detect a target. Each of the IF signals can be processed based at least in part on the generated IF signals being in-band or out of band or being within a certain frequency range within a designated IF band. For example, in an example communications system having three transmitters and three receivers, the first transmitter may be paired with the first receiver, the second transmitter may be paired with the second receiver and the third transmitter and may be paired with the third receiver. For the first receiver, chirp signals emitted by the first transmitter can be downconverted into IF signals that are all within a certain frequency range within the IF band and chirp signals from the second and third transmitters can be downconverted into IF signals that fall within different frequency ranges within the IF band.

For the second receiver, chirp signals from the second transmitters can be downconverted into IF signals fall within a certain frequency ranges within the IF band and chirp signals from the first and third transmitters can be downconverted into IF signals that fall within different frequency ranges within the IF band. For the third receiver, chirp signals from the third transmitter can be downconverted into IF signals that fall within a certain frequency range within the IF band and chirp signals from the first and second transmitters can be downconverted into IF signals that fall within different frequency ranges within the IF band.

Having described preferred embodiments, which serve to illustrate various concepts, structures and techniques, which are the subject of this patent, it will now become apparent that other embodiments incorporating these concepts, structures and techniques may be used. Accordingly, it is submitted that the scope of the patent should not be limited to the described embodiments but rather should be limited only by the spirit and scope of the following claims.

## Claims

1. In an automotive vehicle radar system (100, 130), a sensor comprising
a multiple input and multiple output transmitter (112, 138a - 138n) comprising:
a transmit antenna (115, 134a -134n), wherein the transmit antenna (115, 134a -134n) comprises a plurality of transmit antennas (115, 134a -134n);
a plurality of transmit signal paths (111, 135a - 135n), each of the transmit signal paths (111, 135a - 135n) having an input and an output with the output coupled to the transmit antenna (115, 134a -134n); and
a plurality of signal sources (110, 174), each of the plurality of signal sources (110, 174) coupled to at least one of the plurality of transmit signal path (111, 135a - 135n) inputs and each of the signal sources (110, 174) configured to generate and provide a chirp signal (202, 204, 206, 302, 304, 306) to each of the plurality of transmit signal paths (111, 135a - 135n) such that each of a plurality of chirp signals (202, 204, 206, 302, 304, 306) emitted by the transmit antenna (115, 134a -134n) has a frequency which changes from a first predetermined frequency (F_{1A}, F_{2A}, F_{3A}) to a second predetermined frequency (F_{1B}, F_{2B}, F_{3B}) over a predetermined period of time, and wherein each of the plurality of signals have a different first predetermined frequency (F_{1A}, F_{2A}, F_{3A}); and
a multiple input and multiple output receiver (104, 136a - 136n, 319a, 319b, 319c) comprising:
a receive antenna (105, 132a-132n, 308), wherein the receive antenna comprises a plurality of receive antennas (105, 132a-132n, 308); and
a plurality of receive signal paths (103, 133a - 133n), each of the receive signal paths (103, 133a - 133n) having an input coupled to the receive antenna (105, 132a-132n, 308) and an output at which an intermediate frequency signal is provided and wherein each of the receive signal paths (103, 133a - 133n) is coupled to a corresponding one of the plurality of signal sources (110, 174) such that each receive signal path is (103, 133a - 133n) configured to receive at least a portion of a corresponding one of the plurality of chirp signals (202, 204, 206, 302, 304, 306), **characterized in that**
each of the plurality of chirp signals (202, 204, 206, 302, 304, 306) are separated by a predetermined frequency spacing (F_{X}) from a second, different one of the plurality of chirp signals (202, 204, 206, 302, 304, 306) such that the plurality of chirp signals (202, 204, 206, 302, 304, 306) chirp in parallel from the first predetermined frequency (F_{1A}, F_{2A}, F_{3A}) to the second predetermined frequency (F_{1B}, F_{2B}, F_{3B}).

2. The sensor of claim 1, wherein each of the plurality of chirp signals (202, 204, 206, 302, 304, 306) are linear chirp signals (202, 204, 206, 302, 304, 306).

3. The sensor of clam 1, wherein the predetermined frequency spacing (F_{X}) is equal between each of the plurality of chirp signals (202, 204, 206, 302, 304, 306).

4. The sensor of claim 1, wherein the predetermined frequency spacing is (F_{X}) different between one or more of the plurality of chirp signals (202, 204, 206, 302, 304, 306).

5. The sensor of claim 1, wherein a rate of change of the plurality of chirp signals (202, 204, 206, 302, 304, 306) corresponds to a difference between the first predetermined frequency (F_{1A}, F_{2A}, F_{3A}) and the second predetermined frequency (F_{1B}, F_{2B}, F_{3B}).

6. A method for transmitting and receiving signal for an automotive vehicle radar system (100, 130), the method comprising:
generating a plurality of chirp signals (202, 204, 206, 302, 304, 306) with each of the chirp signals (202, 204, 206, 302, 304, 306) having a frequency characteristic such that the chirp signals (202, 204, 206, 302, 304, 306) linearly increase in frequency from a first predetermined frequency (F_{1A}, F_{2A}, F_{3A}) at a first point in time to a second predetermined frequency (F_{1B}, F_{2B}, F_{3B}) at a second point in time, wherein the first predetermined frequency (F_{1A}, F_{2A}, F_{3A}) of each of the plurality of chirp signals (202, 204, 206, 302, 304, 306) is different;
transmitting the plurality of chirp signals (202, 204, 206, 302, 304, 306) through a like plurality of transmit antennas (115, 134a -134n);
receiving a plurality of return chirp signals (202, 204, 206, 302, 304, 306) at a plurality of receive antennas (105, 132a-132n, 308), wherein each of the plurality of transmit antennas (115, 134a -134n) are paired with at least one of the plurality of receive antennas (105, 132a-132n, 308) as a transmit reference;
at each of the plurality of receive antennas (105, 132a-132n, 308),
comparing one or more of the plurality of return chirp signals (202, 204, 206, 302, 304, 306) to one or more oscillator signals, each of the one or more oscillator signals corresponding to the transmit reference of the respective one of the plurality of receive antennas (105, 132a-132n, 308);
determining an intermediate frequency for each of the one or more of the plurality of return chirp signals (202, 204, 206, 302, 304, 306), wherein the intermediate frequency corresponds to a difference between a respective return chirp signal (202, 204, 206, 302, 304, 306) and a respective one of the one or more oscillator signals; and
identifying a respective one of the plurality of transmit antennas (115, 134a-134n) that transmitted the one or more of the plurality of received signals, **characterized in that**
each of the plurality of chirp signals (202, 204, 206, 302, 304, 306) are separated by a predetermined frequency spacing (F_{X}) from a second, different one of the plurality of chirp signals (202, 204, 206, 302, 304, 306) as the plurality of chirp signals (202, 204, 206, 302, 304, 306) chirp in parallel from the first predetermined frequency (F_{1A}, F_{2A}, F_{3A}) to the second predetermined frequency (F_{1B}, F_{2B}, F_{3B}).

7. The method of claim 6, further comprising transmitting the plurality of chirp signals (202, 204, 206, 302, 304, 306) through the plurality of transmit antennas 115, 134a-134n), wherein each of the plurality of transmit antennas (115, 134a-134n) are coupled to a single transmitter (112, 138a - 138n).

8. The method of claim 6, wherein each of the plurality of chirp signals (202, 204, 206, 302, 304, 306) chirp in parallel from the first predetermined frequency (F_{1A}, F_{2A}, F_{3A}) to the second predetermined frequency (F_{1B}, F_{2B}, F_{3B}).

9. The method of claim 6, further comprising determining a different intermediate frequency for signals transmitted from the same transmit antennas (115, 134a-134n) of the plurality of transmit antennas (115, 134a-134n) by each of the plurality of receive antennas (105, 132a-132n, 308).

10. The method of claim 6, further comprising transmitting the plurality of chirp signals (202, 204, 206, 302, 304, 306) substantially concurrently from each of the plurality of transmit antennas (115, 134a-134n).

11. The method of claim 6, further comprising receiving the plurality of chirp signals (202, 204, 206, 302, 304, 306) substantially concurrently at each of the plurality of receive antennas (105, 132a-132n, 308).

12. In an automotive radar system (100, 130), a sensor comprising:
a multiple input multiple output transmitter (112, 138a - 138n) comprising:
a plurality of means for emitting (115, 134a-134n);
a like first plurality of transmit signal paths (111, 135a - 135n), each of the transmit signal paths (111, 135a - 135n) having an input and an output with the output coupled to a corresponding one of said plurality of means for emitting (115, 134a-134n);
a first means for generating radiofrequency chirp signals (202, 204, 206, 302, 304, 306) to each of the transmit signal paths (111, 135a - 135n), wherein each radiofrequency signal path receives a corresponding one of a like plurality of radiofrequency chirp signals (202, 204, 206, 302, 304, 306) with each of said chirp signals (202, 204, 206, 302, 304, 306) having a frequency which linearly changes from a first frequency (F_{1A}, F_{2A}, F_{3A}) to a second, different frequency (F_{1B}, F_{2B}, F_{3B}), and wherein each of the plurality of radiofrequency chirp signals (202, 204, 206, 302, 304, 306) has a different first frequency (F_{1A}, F_{2A}, F_{3A}); and
a multiple input and multiple output receiver (104, 136a - 136n, 319a, 319b, 319c) comprising:
a plurality of means for receiving (105, 132a-132n, 308); and
a like second plurality of receive signal paths (103, 133a - 133n), each of said receive signal paths (103, 133a - 133n) having input coupled to a corresponding one of said means for receiving (105, 132a-132n, 308) and coupled to receive a portion of a respective one of said radiofrequency chirp signals (202, 204, 206, 302, 304, 306) such that each of said receive signal paths (103, 133a - 133n) receive a portion of a corresponding one of the radiofrequency chirp signal (202, 204, 206, 302, 304, 306) provided to each of said plurality of radiofrequency transmit paths.

13. The sensor of claim 12, wherein each of the plurality of radio frequency chirp signals (202, 204, 206, 302, 304, 306) are separated by a predetermined frequency spacing (F_{X}) from a second, different one of the plurality of radiofrequency chirp signals (202, 204, 206, 302, 304, 306) such that the plurality of radiofrequency chirp signals (202, 204, 206, 302, 304, 306) chirp in parallel from the first predetermined frequency (F_{1A}, F_{2A}, F_{3A}) to the second predetermined frequency (F_{1B}, F_{2B}, F_{3B})..

14. The sensor of clam 13, wherein the predetermined frequency spacing (F_{X}) is equal or different between each of the plurality of radiofrequency chirp signals (202, 204, 206, 302, 304, 306).
